# EUROPEAN PATENT APPLICATION

(11) **EP 4 614 646 A1**
(43) Date of publication of application: **10.09.2025**
(21) Application number: 23885819.5
(22) Date of filing: 01.11.2023
(51) Int. Cl.: H01M 10/0562, H01B 1/06, H01M 10/0565, H01M 10/0585

(54) **SOLID ELECTROLYTE LAMINATE, SOLID SECONDARY BATTERY, AND PRODUCTION METHOD FOR SAME**

(30) Priority: 02.11.2022 JP 2022176682
(71) Applicant: Nissan Motor Co., Ltd., Kanagawa 221-0023 (JP); Yamaha Hatsudoki Kabushiki Kaisha, Iwata-shi, Shizuoka 438-8501 (JP)
(72) Inventor: TANAKA, Hideyasu, Tokyo 100-0006 (JP); OKITA, Kazunari, Ikeda-shi, Osaka 563-8577 (JP); KAWAGUCHI, Shunsuke, Atsugi-shi, Kanagawa 243-0123 (JP); MUTA, Takahisa, Iwata-shi, Shizuoka 438-8501 (JP)
(74) Representative: Grünecker Patent- und Rechtsanwälte PartG mbB
(86) International application number: PCT/JP2023/039444
(87) International publication number: WO 2024/096065

(57) **Abstract**

Provided is a solid electrolyte laminate capable of realizing a solid-state secondary battery capable of suppressing a short circuit during charging with a large amount of current and/or suppressing a decrease of a battery capacity even when a charge and discharge cycle is repeatedly performed. A solid electrolyte laminate 4 in which three or more electrolyte layers containing a solid electrolyte are laminated, comprising a first electrolyte layer 1 having a support; and a second electrolyte layer 2 and a third electrolyte layer 3 disposed so as to sandwich the first electrolyte layer 1 and having no support, in which a film thickness (T2) of the second electrolyte layer 2 is 1.5 to 5 times as large as a film thickness (T3) of the third electrolyte layer 3.

## Description

### TECHNICAL FIELD

The present invention relates to a solid electrolyte laminate, a solid-state secondary battery using the solid electrolyte laminate, and a method for manufacturing the solid-state secondary battery.

### BACKGROUND ART

As a secondary battery having a high energy density, a lithium ion secondary battery has been widely used. In recent years, it has been desired to convert gasoline vehicles to electric vehicles as a promising means for achieving carbon neutral, and the use of batteries for electric vehicles has been also accelerating.

However, when a lithium ion secondary battery is used in electric vehicles, a long battery charging time is required compared to the fill-up time for gasoline vehicles. Since the long charging time is a bottleneck in widespread use of the lithium ion secondary battery, performance to charge a battery with a large amount of current in a shorter time is required.

As a technique enabling charging at a large amount of current, a solid-state lithium ion secondary battery (herein, simply referred to sometimes as a "solid-state secondary battery") using a solid electrolyte has been proposed. Most of the solid-state electrolytes have a lithium ionic transference number of 1. With the recent improvement in ion conductivity, the solid-state secondary battery has been becoming suitable basically for flowing a large amount of current.

In a solid-state secondary battery using a solid electrolyte, the solid electrolyte is a powder in some cases or a gel in other cases. The solid electrolyte layer having a solid electrolyte and serving as a separator is preferably formed thin in order to improve energy density. At the same time, similarly to a polyolefin-based separator used in existing lithium ion secondary batteries using an organic electrolyte solution, at least a part of the solid electrolyte layer is desired to be self-supportive. Since at least a part of the solid electrolyte layer is self-supportive, the powdery or gel-like solid electrolyte is becomes easily handled, with the result that enlargement of the area of the battery and improvement of mass production can be easily made.

Related to this point, a solid electrolyte laminate using a sheet having a large number of through-holes as a support has been proposed (see, for example, Patent Literatures 1 to 3).

### Citation List

### Patent Literatures

Patent Literature 1: JP 2016-31789 A
Patent Literature 2: JP 2017-208250 A
Patent Literature 3: JP 2021-150204 A

### SUMMARY OF INVENTION

### Technical Problem

However, the solid secondary batteries of the conventional solid electrolyte sheets (solid electrolyte laminates) described in Patent Literatures 1 to 3 have a problem in that a short circuit tends to occur particularly when charged with a large amount of current, and a problem that the battery capacity tends to decrease when a charge-discharge cycle repeatedly performed. In the circumstance, it has been required to realize a solid-state secondary battery capable of suppressing a short circuit when charged with a large amount of current and/or capable of suppressing a decrease of a battery capacity even when a charge-discharge cycle is repeatedly performed.

An object of the present invention is to provide a solid electrolyte laminate capable of realizing a solid-state secondary battery capable of suppressing a short circuit when charged with a large amount of current and/or capable of suppressing a decrease of a battery capacity even when a charge-discharge cycle is repeatedly performed. Another object of the present invention is to provide a solid-state secondary battery using the solid electrolyte laminate, and a method for manufacturing the solid-state secondary battery.

### Solution to Problem

An aspect of the present invention is as follows:
[1] A solid electrolyte laminate formed of laminating three or more electrolyte layers containing a solid electrolyte, having:
   a first electrolyte layer having a support; and
   a second electrolyte layer and a third electrolyte layer disposed so as to sandwich the first electrolyte layer and having no support, in which
   the film thickness (T2) of the second electrolyte layer is 1.5 to 5 times as large as the film thickness (T3) of the third electrolyte layer.
[2] The solid electrolyte laminate according to item 1, in which the support contains a woven fabric;
[3] The solid electrolyte laminate according to item 2, in which the film thickness (T2) of the second electrolyte layer is 0.2 to 2 times as large as a fiber assembly width of the woven fabric;
[4] The solid electrolyte laminate according to item 1, in which the support contains at least one of a nonwoven fabric and short fibers;
[5] The solid electrolyte laminate according to item 4, in which the support contains a nonwoven fabric, and
   the film thickness (T2) of the second electrolyte layer is 3 to 20 times as large as an average diameter of fibers constituting the support;
[6] A solid-state secondary electrolyte having a positive electrode, a negative electrode, and the solid electrolyte laminate according to any one of items 1 to 5, in which
   the second electrolyte layer is in contact with the positive electrode or the negative electrode.

Another aspect of the present invention is as follows:

A method for manufacturing a solid-state secondary battery, having the steps of:
(1) providing a second B electrolyte layer having no support on either a positive electrode mixture layer or a negative electrode mixture layer;
(2) forming a first electrolyte layer having a support, and then providing a second A electrolyte layer and a third electrolyte layer {note that, the film thickness (T2A) of the second A electrolyte layer is substantially equal to the film thickness (T3) of the third electrolyte layer} having no support so as to sandwich the first electrolyte layer to obtain a laminate precursor; and
(3) laminating the positive electrode mixture layer, the laminate precursor, and the negative electrode mixture layer so that the second A electrolyte layer and the second B electrolyte layer face each other to make a total film thickness (T2; T2A+T2B) of the second A electrolyte layer and the second B electrolyte layer to be 1.5 to 5 times as large as a film thickness (T3) of the third electrolyte layer.

### BRIEF DESCRIPTION OF DRAWINGS

Fig. 1 is a cross-sectional view showing a structure of a solid electrolyte laminate according to an embodiment of the present invention.
Fig. 2 is a cross-sectional view schematically showing an analysis site in Example 3 and Comparative Example 4.
Fig. 3 is a view showing how to manufacture a solid electrolyte laminate according to an embodiment of the present invention.

### DESCRIPTION OF EMBODIMENTS

An aspect of the present invention is directed to a solid electrolyte laminate formed by laminating three or more electrolyte layers containing a solid electrolyte. The solid electrolyte laminate has a first electrolyte layer having a support, and a second electrolyte layer and a third electrolyte layer disposed so as to sandwich the first electrolyte layer and having no support, in which the film thickness (T2) of the second electrolyte layer is 1.5 to 5 times as large as a film thickness (T3) of the third electrolyte layer.

Another aspect of the present invention is directed to a method for manufacturing a solid-state secondary battery, having steps of:
(1) providing a second B electrolyte layer having no support to either a positive electrode mixture layer or a negative electrode mixture layer;
(2) forming a first electrolyte layer having a support, and then providing a second A electrolyte layer and a third electrolyte layer {note that, the film thickness (T2A) of the second A electrolyte layer is substantially equal to the film thickness (T3) of the third electrolyte layer} having no support so as to sandwich the first electrolyte layer to obtain a laminate precursor; and
(3) laminating the positive electrode mixture layer, the laminate precursor, and the negative electrode mixture layer so that the second A electrolyte layer and the second B electrolyte layer face each other to make a total film thickness (T2; T2A+T2B) of the second A electrolyte layer and the second B electrolyte layer to be 1.5 to 5 times as large as a film thickness (T3) of the third electrolyte layer.

According to the solid electrolyte laminate in the above aspect, even though a solid electrolyte layer having a support is used, it is possible to provide a solid electrolyte laminate that can realize a solid-state secondary battery capable of suppressing a short circuit when charged with a large amount of current and/or suppressing a decrease of a battery capacity even when a charge-discharge cycle is repeatedly performed.

Hereinafter, an embodiment of the present invention (hereinafter referred to as "the present embodiment") will be described with reference to the drawings, but the present invention is not limited to the present embodiment and the contents illustrated in the drawings, and can be modified in various ways without departing from the gist thereof.

In the specification, the upper limit value or the lower limit value of a numerical range described stepwise may be replaced with the upper limit value or the lower limit value of another numerical range described stepwise, or may be replaced with a value shown in Examples. The scale, shape, length, and others illustrated in the drawings may be exaggerated for clarity's sake.

In the specification, a solid electrolyte layer having a support and a solid electrolyte layer having no support are treated as mutually different layers. In the specification, the supports different in structure (e.g., composition and shape) and different in composition of e.g., solid electrolytes contained therein are treated as mutually different layers. Here, when the solid electrolyte layer B (B1 layer and B2 layer) having no support is separated by the solid electrolyte layer having a support, the B1 layer and the B2 layer are independently treated as different layers. In contrast, regardless of whether the structure (e.g., composition and shape) is the same or different, if the solid electrolyte layers B (B1 layer and B2 layer) having no support are laminated in contact with each other, the B1 layer and the B2 layer are collectively treated as a single solid electrolyte layer.

### [Solid Electrolyte Laminate]

### <<Schematic Structure>>

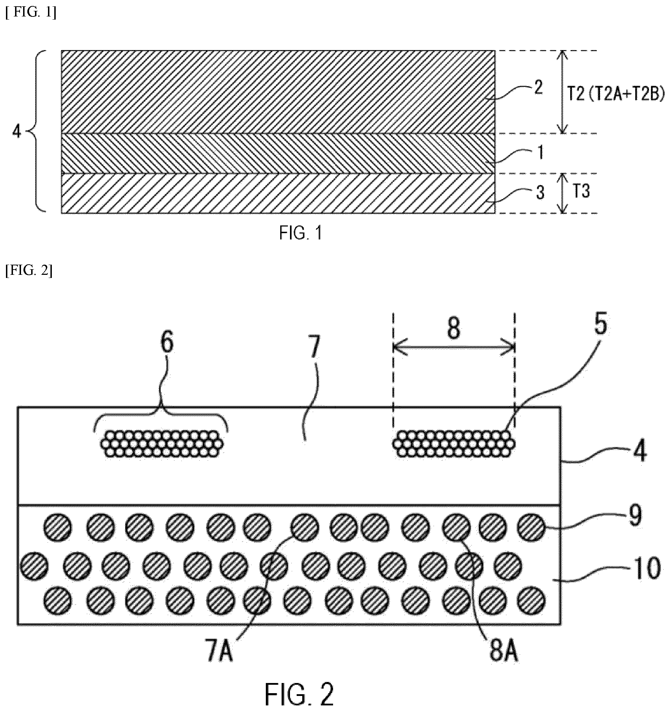

A solid electrolyte laminate (in the specification, sometimes simply referred to as a "laminate") of the present embodiment is shown in Fig. 1. Fig. 1 is a cross-sectional view schematically showing a solid electrolyte laminate 4 constituted of a three-layer structure.

The solid electrolyte laminate 4 according to the present embodiment is a solid electrolyte laminate 4 formed by laminating three or more electrolyte layers containing a solid electrolyte and having
a first electrolyte layer 1 having a support, and
a second electrolyte layer 2 and a third electrolyte layer 3 disposed so as to sandwich the first electrolyte layer 1 and having no support and
the film thickness (T2) of the second electrolyte layer 2 is 1.5 to 5 times as large as the film thickness (T3) of the third electrolyte layer 3.

The laminate 4 has a structure in which the second electrolyte layer 2 and the third electrolyte layer 3 positioned on both sides (upper surface side and lower surface side in Fig. 1) of the laminate 4 are disposed so as to sandwich the first electrolyte layer 1 having at least one support. The film thickness (T2) of the second electrolyte layer 2 having no support and positioned on one of the surface sides of the laminate 4 is 1.5 to 5 times, and preferably 1.5 to 4.0 times as large as the film thickness (T3) of the third electrolyte layer 3 having no support and positioned on the other surface side. In the figure, the second electrolyte layer 2 is illustrated on the upper surface side, and the third electrolyte layer 3 is illustrated on the lower surface side, but the arrangement thereof may be reversed.

If one of the solid electrolyte layers (herein, the second electrolyte layer 2) having no support and larger in thickness is disposed so as to be in contact with the negative electrode mixture layer, it is possible to suppress a short circuit caused by precipitation of Li metal during charging, whereas if the solid electrolyte layer (herein, the second electrolyte layer 2) having no support is disposed in contact with the positive electrode mixture layer, it is possible to suppress a decrease in battery capacity due to local deterioration of the positive electrode active material.

The first electrolyte layer 1 may be a single layer or constituted of two or more layers having a support and different in constitution (e.g., composition and shape), or two or more layers different in composition of e.g., solid electrolyte and binder. The second electrolyte layer 2 and the third electrolyte layer 3 may have the same or different structures. The second electrolyte layer and the third electrolyte layer 3 may have a compositional distribution in the film-thickness direction and/or the plane direction.

If the second electrolyte layer 2 and the third electrolyte layer 3 are in contact with the positive electrode mixture layer or the negative electrode mixture layer, the laminate 4 functions as a solid-state secondary battery. Note that, in the present invention, since the solid electrolyte layer does not contain an active material, the solid electrolyte layer is distinguished from the positive electrode mixture layer and the negative electrode mixture layer which function as active material layers. However, the solid electrolyte layer may contain any active material as long as it does not impair the effect of the present invention and does not function as an active material layer.

The laminate 4 is not necessarily required to be a sheet (solid electrolyte sheet) having a self-supportive strength. However, a structure (first electrolyte layer 1) having a support wholly or partly having a self-supportive strength results in improvement of the whole strength of the laminate 4. This is preferable in view of preventing the solid electrolyte from falling off, preventing the occurrence of cracking of the solid electrolyte layer, further facilitating enlargement of the area of the battery and improvement of handling resulting in mass productivity.

In the laminate 4, the upper limit of the number of solid electrolyte layers is not limited, but is preferably 7 or less, more preferably 5 or less, and still more preferably 4 or less. The film thickness of the laminate 4 is not particularly limited. If the film thickness is too thick, the energy density of the solid-state secondary battery tends to decrease, whereas if the film thickness is too thin, there is a high probability for the solid-state secondary battery to cause short-circuit. For this reason, the film thickness is preferably 7 to 80 µm, more preferably 10 to 70 µm, and still more preferably 13 to 60 µm. In Fig. 1, the film thickness of the laminate 4 corresponds to the sum of the film thickness of the first electrolyte layer 1, the film thickness (T2) of the second electrolyte layer 2, and the film thickness (T3) of the third electrolyte layer 3.

### <<Solid Electrolyte Layer Having Support>>

The solid electrolyte layers can be roughly divided into a group of a solid electrolyte layer having a support and a group of a solid electrolyte layer having no support. Of them, in the solid electrolyte layer having a support (herein, first electrolyte layer 1), the volume ratio of a solid electrolyte is not particularly limited. However, when the volume ratio is too small, the resistance of the battery tends to increase, with the result that the capacity tends to decrease. Whereas, if the volume ratio is too large, the ratio of the support tends to decrease, with the result that the effect of the support to reinforce the solid electrolyte layer tends to decrease. Thus, the volume ratio of the solid electrolyte is preferably 10 to 90%, more preferably 15 to 80%, and still more preferably 20 to 70%.

The thickness of the solid electrolyte layer having a support may be substantially the same as the thickness of the support. Specifically, the thickness of the solid electrolyte layer having a support may be 0.95 to 1.05 times as large as the thickness of the support.

### <Support>

The support is not particularly limited, but any material such as a woven fabric, a nonwoven fabric, a microporous film, and a sheet having a large number of through-holes can be used, and the structure thereof (e.g., composition and shape) and the structure of an opening (e.g., size, shape) are not limited. The support is not limited to a sheet shape alone. In a solid electrolyte layer obtained by using microfine short fibers and a solid electrolyte in combination, the short fibers fall within the concept of the "support" in the specification. In this case, the short fibers may be physically bound to each other, or may be dispersed in the solid electrolyte layer without binding.

In the present embodiment, it is preferable that the support contains a woven fabric (in an embodiment, the support is a woven fabric), and it is also preferable that the support contains at least one of a nonwoven fabric and short fibers (in an embodiment, the support is at least one of a nonwoven fabric and short fibers).

### (Woven fabric)

As the support, a woven fabric can be used. The woven fabric is formed by assembling a plurality of monofilaments as a basic unit of fiber into a bundle and weaving, if necessary, using, e.g., a binding agent. Here, when a woven fabric is used as the support, an average value obtained by measuring the width of the bundle of the assembled monofilaments in a plane view from the thickness direction of the woven fabric is defined as the "fiber assembly width" in the specification. In the measurement method in the plane view, an optical microscope or a scanning electron microscope (SEM) may be used. When the fiber assembly width is distributed, the widths of a plurality of sites are measured, and an arithmetic average value thereof is calculated, and regarded as the fiber assembly width. Note that the fiber assembly width is indicated by reference numeral 8 in Fig. 2.

The fiber assembly width and the number of fibers to be assembled are not particularly limited. If the fiber assembly width is too large, the opening ratio in the support tends to decrease, whereas if the fiber assembly width is too small, the strength of the fibers tends to decrease, with the result that it tends to be difficult to weave a woven fabric. Thus, the fiber assembly width is preferably 3 to 200 µm, more preferably 5 to 100 µm, and still more preferably 7 to 90 µm. Examples of a type of textile weave that may be appropriately employed include plain weave, twill weave, satin weave, and Leno weave. However, the type of textile weave is not particularly limited as long as the shape can be maintained.

### (Nonwoven Fabric)

As the support, a nonwoven fabric can be used. The average fiber diameter of the fibrous material constituting the nonwoven fabric is not particularly limited. If the average fiber diameter is too large, the opening ratio of the support tends to decrease, whereas if the average fiber diameter is too small, the strength as the support tends to decrease. Thus, the average fiber diameter is preferably 0.3 to 25 µm, and more preferably 0.5 to 22 µm.

The basis weight of the nonwoven fabric is not particularly limited, but if the basis weight is too large, the opening diameter and the opening ratio are likely to decrease, with the result that the resistance of the battery tends to increase. Whereas, if the basis weight is too small, the ratio of the fibrous material is too small, with the result that strength as a support tends to decrease. Thus, the basis weight of the nonwoven fabric is preferably 1.0 to 10.0 g/m², more preferably 1.5 to 8.0 g/m², and still more preferably 2.0 to 6.0 g/m².

The porosity of the nonwoven fabric with respect to the film thickness is not particularly limited. If the porosity is too small, the ratio occupied by the solid electrolyte tends to decrease, with the result that the resistance of the battery tends to increase. Whereas if the porosity is too large, the ratio of the fibrous material tends to decrease, with the result that the strength as a support tends to decrease. Thus, the porosity of the nonwoven fabric is preferably 30 to 90%, more preferably 40 to 85%, and still more preferably 50 to 80%.

### (Microporous Film)

As the support, a microporous film can be used. The structure of pores in the microporous film (e.g., average pore diameter and distribution width thereof) is not particularly limited. If the average pore diameter is too small, it tends to be difficult particularly for a particulate solid electrolyte to be filled into the opening, whereas if the average pore diameter is too large, it is likely for a particulate solid electrolyte, in particular, to fall off from the opening. Thus, the average pore size in the microporous film is preferably 0.5 to 5 µm, and more preferably 1 to 4 µm.

### (Sheet Having a Large Number of Through-holes)

As the support, a sheet in the form of a mesh (sheet having a large number of through-holes) can be used. The structure (e.g., average pore diameter and shape) of the through-holes of the sheet is not particularly limited. For example, the shape of the through-hole is not limited to, e.g., a square or a circle, and may be, e.g., a rectangle, a rhombus and an oval. Examples of a method of forming through-holes include a method of physically forming openings using, e.g., a mold or a drill; a method of forming openings using laser; photolithography and a method for forming openings using thermography. Furthermore, a support having through-holes, which are formed by making cuts in the sheet and pulling the sheet toward both sides, may be used.

### (Short Fiber)

As the support, microfine short fibers can be used. The structures (e.g., average fiber diameter, distribution thereof, and average length) of the short fibers are not particularly limited. Similarly to the nonwoven fabric, if the average fiber diameter of the short fibers is too large, the opening ratio of the support tends to decrease, whereas, if the average fiber diameter thereof is too small, the strength as the support tends to decrease. Thus, the average fiber diameter of the short fibers is preferably 0.3 to 25 µm, and more preferably 0.5 to 20 µm. If the average length is too long, the fibers are likely to aggregate when they are used in combination with the solid electrolyte, and thus it is difficult to obtain a uniformly combined structure. Whereas, if the average length is too short, the effect of short fibers to contribute to strength as a support tends to decrease when the short fibers are combined with the solid electrolyte. Thus, the average length of the short fibers is preferably 10 to 2000 µm, more preferably 20 to 1000 µm, and still more preferably 30 to 500 µm.

### (Others)

The material for the support is not limited to the above materials. As long as it can reinforce the solid electrolyte layer having the support, any material can be used as a material for the support. Examples of a material for the support include
resins of polyolefins such as polypropylene and polyethylene;
polyesters such as polystyrene, aramid, polyamideimide, polyimide, nylon, polyethylene terephthalate (PET); and
polyarylate and cellulose, and modified products of them.

In addition, e.g., Al₂O₃, glass, and metals such as nickel; and various types of inorganic substances can be used as the material for the support. Note that a material having a high insulating property is preferably used as the material for the support because it is unlikely to cause a short circuit due to contact with an electrode.

The film thickness of the support is not particularly limited. If the film thickness is too thick, the energy density of the battery tends to decrease, whereas if the film thickness is too thin, the strength as a support tends to decrease. Thus, the film thickness of the support is preferably 2 to 40 µm, more preferably 3 to 35 µm, and still more preferably 4 to 30 µm.

The film thickness may be measured by a conventionally known method. For example, a film thickness can be obtained by sandwiching a support by, e.g., a commercially available micrometer (for example, a high-precision Digimatic micrometer MDH-25MB manufactured by Mitutoyo Corporation), measuring different sites of the support a plurality of times, and calculating an arithmetic average value from the obtained results.

When a fibrous material (nonwoven fabric or short fiber) is used as the support, the average fiber diameter thereof is not particularly limited. If the average fiber diameter is too large, the thickness of the support tends to increase, whereas if the average fiber diameter is too small, the thickness of the support tends to decrease. Thus, in view of suppressing the occurrence of a problem regarding the thickness, the average fiber diameter of the fibrous material is preferably 0.5 to 20 µm, more preferably 1 to 15 µm, and still more preferably 2 to 10 µm.

The average fiber diameter of the fibrous material contained in the solid electrolyte layer and the distribution thereof may be measured by a conventionally known method. For example, the average fiber diameter and the distribution thereof can be obtained through the steps of cleaving the solid electrolyte laminate to expose the cross section, polishing and smoothing the cross section by, e.g., a cross section polisher, measuring a plurality of fiber portions in the cross section by observing with a SEM, and calculating the arithmetic mean value of the fiber diameters measured and a distribution thereof.

The opening ratio of the support is not particularly limited. If the opening ratio is too small, the resistance of the battery tends to increase, with the result that the capacity tends to decrease. Whereas, if the opening ratio is too large, the strength as a support tends to decrease. Thus, the opening ratio of the support is preferably 10 to 90%, more preferably 15 to 80%, and still more preferably 20 to 70%.

The opening ratio of the support is defined as the ratio of an area through which an opposite side thereof can be seen with respect to an area of a surface treated as an observation target in the plane view of the support viewed from the thickness direction.

The volume ratio of the support in the solid electrolyte layer having a support is not particularly limited. If the volume ratio is too large, the resistance of the battery tends to increase, with the result that the capacity tends to decrease. Whereas, if the volume ratio is too small, the ratio of the support tends to decrease, with the result that the strength due to the support tends to decrease. Thus, the volume ratio is preferably 10 to 90%, more preferably 20 to 85%, and still more preferably 30 to 80%.

### <<Solid Electrolyte Layer Having No Support>>

With regard to the solid electrolyte layer having no support, the thickness (herein, the film thickness (T2) of the second electrolyte layer 2) of the solid electrolyte layer having no support and positioned on one of the surface sides of the laminate 4, is 1.5 to 5 times, and more preferably 1.5 to 4 times as large as the thickness (herein, the film thickness (T3) of the third electrolyte layer 3) of the solid electrolyte layer also having no support and positioned on the other surface side. Each of the second electrolyte layer 2 and the third electrolyte layer 3 is in contact with a solid electrolyte layer (first electrolyte layer 1) having a support. If the support of the first electrolyte layer 1 contains a woven fabric, the film thickness (T2) of the second electrolyte layer 2 is preferably 0.2 to 2 times as large as the fiber assembly width of the woven fabric, whereas if the support contains a nonwoven fabric, the film thickness (T2) is preferably 2 to 20 times or 3 to 20 times as large as the average fiber diameter of the nonwoven fabric.

Without being bound by theory, from the results of the experiments shown in Examples and the results of the solid-state battery simulation based on the Newman model, the present inventors found out that a short circuit and deterioration are accelerated by the following mechanism. That is, the present inventors found that "state-plaques" such as an electrolyte potential and an SOC, are formed in the solid-state battery due to the presence of the support and problems such as short circuit due to Li deposition and deterioration of the active material are accelerated by the plaques. It should be noted that the present inventors also found out that a short circuit and deterioration are caused by the following phenomena in addition to the above causes in conventional solid secondary batteries.

The migration/diffusion path of Li ions is limited by the support;
The contact of the interface between the solid electrolyte sheet and the positive electrode and/or the negative electrode decreases, with the result that the impedance of the battery increases;
Compared to a solid-state lithium secondary battery having no support, Li metal is easily deposited on the surface of the negative electrode particularly when the battery is charged with a large amount of current, with the result that short circuit is more likely to occur;
As the charge-discharge cycle progresses, the positive electrode active material locally deteriorates, with the result that the battery capacity is further reduced.

The present inventors found that the problems such as short circuit and deterioration are not caused by an increase in impedance of the battery derived from the separator made of a solid electrolyte sheet, and have further found that the problems are correlated with the film thickness (in Fig. 1, the film thickness T2 of the second electrolyte layer 2) of the solid electrolyte layer having no support and larger in film thickness.

In addition, the present inventors found a predetermined relationship (specifically, the film thickness of the solid electrolyte layer having no support and larger in film thickness) for suppressing problems such as a short circuit due to Li deposition and deterioration of the active material, and further found a suitable relationship between these and a fiber assembly width and/or a fiber diameter. The present invention has been made through these intensive studies by the present inventors.

The film thickness of the solid electrolyte layer having no support is not particularly limited. If the film thickness is too thick, the energy density of the battery tends to decrease, whereas if the film thickness is too thin, there is a high probability for the battery to cause short-circuit. Thus, the thickness of the solid electrolyte layer having no support is preferably 2 to 60 µm, more preferably 4 to 50 µm, and still more preferably 6 to 40 µm. The film thickness herein means the film thickness of each of the solid electrolyte layers having no support. For example, in Fig. 1, the film thickness means each of the film thickness (T2) of the second electrolyte layer 2 and the film thickness (T3) of the third electrolyte layer 3. Thus, while the film thickness (T2) of the second electrolyte layer 2 and the film thickness (T3) of the third electrolyte layer 3 satisfy the condition that the film thickness (T2) of the second electrolyte layer 2 is 1.5 to 5 times as large as the film thickness (T3) of the third electrolyte layer 3, both of T2 and T3 preferably fall within the above range.

The thickness of the solid electrolyte layer may be measured by a conventionally known method. For example, the film thickness can be obtained through the steps of cleaving the solid electrolyte laminate to expose the cross section, polishing and smoothing the cross section by, e.g., a cross section polisher, measuring the film thickness at a plurality of sites by observing with a SEM and calculating the arithmetic average value of the plurality of measured film thicknesses.

### <<Solid Electrolyte>>

The solid electrolyte is preferably one that can be maintained on the surface of the support or contained in the support, thereby maintaining a layer form, and more preferably one that can be ion conductive. In general, the higher the ionic conductivity of an electrolyte used in a battery, the more preferable. This is not an exception in the present invention. Examples of the solid electrolyte include sulfide solid electrolytes, polymer-based solid electrolytes, gel-based electrolytes, hydride-based solid electrolytes, and oxide-based solid electrolytes. However, even if the solid electrolyte can be maintained on the surface of the support but it flows and cannot maintain the form as a layer is eliminated. Even if the solid electrolyte can be contained in the support but it flows and cannot maintain the form as a layer is eliminated.

Even if a material that decreases layer thickness when the battery is pressurized by e.g., restraint, it can be used as a solid electrolyte. A case where a solid electrolyte flows as the thickness of the layer reduces, with the result that half or more of the solid electrolyte is pushed out from the layer, is not preferable.

The solid electrolyte to be filled in an opening of the support is preferably soft and flexible so as to easily fill. For example, a sulfide solid electrolyte, a polymer solid electrolyte, a gel electrolyte, and a hydride solid electrolyte are preferable. If necessary, a binder component, a component such as a viscosity modifier necessary for filling by application may be added.

Examples of the sulfide solid electrolyte include glass-based and glass ceramics-based electrolytes such as Li₂S-P₂S₅, Li₂S-P₂S₃, Li₂S-P₂S₃-P₂S₅, Li₂S-P₂S₅-GeS₂, Li₂S-P₂S₅-B₂S₃, Li₂S-SiS₂, Li₂S-SiS₂-P₂O₅, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₃PO₄, LiBr-Li₂S-SiS₂, Li₂S-GeS₂, Li₂S-GeS₂-ZnS, Li₂S-GeS₂-Sb₂S₅, Li₂S-GeS₂-Ga₂S₃, Li₂S-GeS₂-A1₂S₃, LiI-Li₂S-GeS₂, Li₂S-GeS₂-Li₃PO₄, Li₂S-Ga₂S₃, Li₂S-B₂S₃, Li₂S-Al₂S₃, Li₂S-SiS₂-Al₂S₃, LiI-Li₂S-B₂S₃, Li₂S-B₂S₃-Li₃PO₄, Li₂S-P₂S₅-LiBr, Li₂S-P₂S₅-Li₃N, and Li₂S-P₂S₅-LiBH₄

Examples of the crystal base include argyrodite-form crystals represented by Li₆PS₅X (wherein X = Cl, Br, I) and Li₇₋ₓPS₆₋ₓXₓ (wherein X = Cl, Br, I, 0 ≤ x ≤ 1.8), and LGPS-form crystals represented by Li_{3.4}P_{0.6}Si_{0.4}S₄, Li_{9.54}Si_{1.74}P_{1.44}S_{11.7}Cl_{0.3}, Li₄₋ₓGe₁₋ₓPₓS₄ (wherein 0 ≤ x ≤ 1), and Li₁₀GeP₂S_{11.7}O_{0.3}.

Examples of the polymer-based solid electrolyte and the gel-based electrolyte that can be used, include an electrolyte salt that exhibits ion conductivity when dissolved in a polymer compound, and an electrolyte salt exhibits ion conductivity when dissolved together with a polymer and a monomer in a solvent. Specifically, when the lithium salt is used as the electrolyte salt, examples of the lithium salt include conventionally known lithium salts such as lithium hexafluorophosphate (LiPF₆), lithium bis(fluorosulfonyl) imide (Li(FSO₂)₂)N), lithium bis(trifluoromethanesulfonyl) imide (Li(CF₃SO₂)₂N), lithium perchlorate (LiClO₄), lithium arsenic hexafluoride (LiAsF₆), lithium tetrafluoroborate (LiBF₄), lithium trifluoromethanesulfonate (LiCF₃SO₃), and lithium bistrifluoromethylsulfonylimide [LiN(CF₃SO₃)₂].

As a polymer in which the polymer itself dissolves an electrolyte salt and exhibits ion conductivity, for example, polyethylene glycol, polymers having polyacrylic acid, polymethacrylic acid, polyethylene oxide, polypropylene oxide, polyvinyl alcohol, polyphosphazene, and polysilane, in the main chain, and, e.g., polymers which are, e.g., copolymers of these and have a polyoxyethylene structure in the side chain can be used.

The polymer and the monomer to be used in the gel electrolyte in which the electrolyte salt is dissolved in the electrolyte solvent together with the polymer and the monomer to gel to exhibit ion conductivity are not particularly limited. Examples of the polymer include polyvinyl chloride, polyacrylonitrile, polyethylene, polypropylene, polyester, polyacrylate, and copolymers thereof. Examples of the monomer include carborane-based materials such as ortho-carborane, meta-carborane, and para-carborane; adamantane-based material such as 2-adamantanone, 1-adamantanone, 1-adamantanecarbonitrile, or 2-adamantanecarbonitrile; dinitrile compounds such as succinonitrile, methylsuccinonitrile, tetramethylsuccinonitrile, azobisisobutyronitrile, glutaronitrile, adiponitrile, pimelonitrile, octanedinitrile, azelanitrile, and sebaconitrile; and sulfolane compounds such as sulfolane, ethylmethylsulfone, and 3-methylsulfolane.

Examples of the electrolyte solvent include a mixed solvent of a cyclic carbonate and a chain carbonate. Typical examples of the cyclic carbonate include ethylene carbonate (EC) and propylene carbonate (PC), and typical examples of the chain carbonate include dimethyl carbonate (DMC), diethyl carbonate (DEC), and ethyl methyl carbonate (EMC). However, the present invention is not limited thereto.

As the electrolyte solvent, an ionic liquid can also be used. Specific examples thereof include 1,2-ethylmethylimidazolium bis(fluorosulfonyl) imide, 1,2-ethylmethylimidazolium bis(trifluoromethanesulfonyl) imide, 1-ethyl-3 methylimidazolium bis(fluorosulfonyl) imide (abbreviation: EMImFSI), N-methylpropylpyrrolidinium bis(fluorosulfonyl) imide, N-methylpropylpyrrolidinium bis(trifluoromethanesulfonyl) imide, diethylmethylmethoxyethylammonium bis(trifluoromethanesulfonyl) imide, ciethylammonium bis(fluorosulfonyl) imide, diallyldimethylammonium (trifluoromethanesulfonyl) imide, and diallyldimethylammonium (fluorosulfonyl) imide. However, the present invention is not limited thereto.

The hydride solid electrolyte is preferably one having ion conductivity. Examples of the hydride solid electrolyte include LiBH₄, LiAlH₄, Li₃AlH₆, LiBH(Et)₃, LiBH(s-Bu)₃, LiNH₂, Li₂NH, Li[OC(CH₃)₃]₃AlH, Li(OCH₃)₃AlH, Li(OC₂H₅)₃H, a solid electrolyte having a molar ratio of LiBH₄ and LiI being 1: 1 to 20: 1, rotatable complex ions such as, Li₂B₁₂H₁₂ and Li₃MoH₉, and a solid solution of a plurality of these.

Examples of the oxide solid electrolyte include Li₇La₃Zr₂O₁₂ (LLZ), LiₓLa_{y}TiO₃ where x = 0.3 to 0.7, y = 0.3 to 0.7] (LLT), Li_{3.5}Zn_{0.25}GeO₄ having a lithium super ionic conductor (LISICON)-form crystal structure, and LiTi₂P₃O₁₂ having a natrium super ionic conductor (NASICON)-form crystal structure. However, the present invention is not limited thereto.

A phosphorus compound containing Li, P, and O can also be used as the solid electrolyte. For example, LiPON, LiPOD (wherein D is at least one selected from transition metals), and LiAON (wherein A is at least one selected from the group consisting of, e.g., Si, B, Ge, Al, C, and Ga) obtained by substituting parts of oxygen in Li₃PO₄ and Li₃PO₄ are substituted with nitrogen are also preferable. Li₃N (N is used in place of P) may be used.

Of them, a sulfide solid electrolyte is preferable as the solid electrolyte since the ionic conductivity thereof is high, and an argyrodite-form (crystalline system) sulfide solid electrolyte is more preferable since it is electrochemically stable.

In the case when a powdery sulfide solid electrolyte is used, as the average particle size thereof is reduced, the opening of the support becomes easily filled with the solid electrolyte. In contrast, when the solid electrolyte is used in a slurry state, dispersibility of the solid electrolyte in the slurry tends to decrease, with the result that it tends to be difficult to obtain a uniform solid electrolyte sheet. When the average particle size increases, the ratio of the large-size solid electrolyte particles tends to increase. As a result, it is difficult to not only fill the opening of the support with the solid electrolyte but also obtain a solid electrolyte layer uniform in thickness. Thus, the average particle size of the sulfide solid electrolyte is preferably 0.1 to 10 µm.

The average particle diameter and particle size distribution of the powdery solid electrolyte can be determined by a commonly known method. Examples of the method include a dry-system particle-size distribution measuring apparatus (for example, laser diffraction/scattering system particle size distribution measuring apparatus LA-960V2 manufactured by HORIBA, Ltd.) using laser diffraction/scattering can be used. The solid electrolyte may be used alone, or may be used in combination of two or more thereof.

### <Binder>

The solid electrolyte layer may contain a binder in order to improve the binding property between a support and a solid electrolyte layer and/or between solid electrolyte layers. As the binder, known binders can be used. Examples of the binder include styrene-based thermoplastic elastomers such as styrene butadiene block polymers (SBS), styrene ethylene butadiene styrene block polymers (SEBS), and styrene-styrene butadiene-styrene block polymers, styrene butadiene rubbers, natural rubbers, isoprene rubbers, ethylene-propylene-diene terpolymers (EPDM), nitrile rubbers, chloroprene rubbers, and partially or completely hydrogenated products thereof, cellulose such as carboxymethyl cellulose, copolymers of polyacrylic acid esters, polyvinylidene fluoride (PVDF), polyvinylidene fluoride (PVDF-HFP) (polyvinylidene fluoride-hexafluoropropylene copolymers), and carboxylic acid-modified products thereof, polymethacrylic esters, polyvinyl alcohol, ethylene-vinyl alcohol copolymers, acrylic latexes, polyamides, and polyamides, Examples thereof include polyamideimide. Other than these, e.g., polystyrene, polyolefin, olefin-based thermoplastic elastomer, polycycloolefin, and a silicone resin, are mentioned. These may be used singly or in combination of two or more types thereof.

### <<Method for Forming Solid Electrolyte Layer and Method for Forming Laminate>>

As a method for forming a solid electrolyte layer, a method for forming a solid electrolyte layer commonly used can be employed. For example, there is a method including dissolving or a dispensing a solid electrolyte and a binder in a solvent to obtain a slurry or a solution, applying the slurry or solution of the solid electrolyte, following by drying it; applying a powder of the solid electrolyte material and then removing excessive powder by, e.g. a squeegee.

In the solid electrolyte layer having a support, it is necessary to fill the opening of the support with the solid electrolyte. At that time, a support is held on a sheet and a film serving as a base material, and a slurry or a solution of a solid electrolyte is applied or powder is applied thereon. In this manner, the opening of the support is filled with the solid electrolyte; and at the same time, a solid electrolyte layer having a support integrated with the sheet and the film may be temporarily prepared. At that time, it is preferable that a release treatment is applied to the surfaces of the sheet and the film in contact with the solid electrolyte layer such that the sheet and the film can be removed from the solid electrolyte layer, later.

The method for forming the solid electrolyte layer having no support is also the same as in the method for forming the solid electrolyte layer having the support. That is, it is possible to use a method of applying a slurry or a solution of a solid electrolyte or a method of applying a powder of solid electrolyte material onto the sheet and the film serving as the base material, the solid electrolyte layer having a support, the solid electrolyte layer having no other supports, the positive electrode mixture layer, or the negative electrode mixture layer.

In the above method, it is preferable that first a solid electrolyte layer having no support on a sheet and a film serving as a base material, then the support is placed on the solid electrolyte layer, and further a slurry or a solution of a solid electrolyte or powder thereof to the support to form a laminate. In the aforementioned manner, it is possible to obtain a solid electrolyte laminate having a desired film thickness and the following constitution:
a solid electrolyte layer having no support,
a solid electrolyte layer having a support; and
a solid electrolyte layer having no support,
on the sheet and the film. Thereafter, the sheet and the film may be removed. The resulting laminate may be treated as a self-supportive solid electrolyte sheet. Alternatively, transfer to a positive electrode or a negative electrode is made and the sheet and the film are removed. The resulting laminate may be treated as a solid electrolyte laminate.

Examples of the sheet and the film serving as the base material include a stainless-steel foil and a PET film. However, the sheet and the film are not particularly limited thereto.

In the present embodiment, when the solid electrolyte layers are sequentially laminated by the above-described method, the solid electrolyte laminate after the sheet and film are removed may warp due to contraction stress during drying and residual stress after compression of the solid electrolyte material. The degree of warpage varies depending on the type and material for the support, and is often significant when the film thicknesses of the solid electrolyte layers (difference between film thickness (T2) of second electrolyte layer 2 and film thickness (T3) of third electrolyte layer 3 in Fig. 1) greatly differ. When the solid electrolyte laminate is treated as a self-supportive solid electrolyte sheet, cracking and chipping of the solid electrolyte layer, and a short circuit of the battery are easily induced by the warpage. For the reason, the warpage is preferably suppressed.

Then, in the present embodiment, it is preferable to employ a method for forming a laminate including laminating a positive electrode or a negative electrode, which is obtained by attaching a solid electrolyte layer having no support to either one of the positive electrode mixture layer and the negative electrode mixture layer, and a solid electrolyte laminate in contact with each other such that the film thickness of the solid electrolyte layer having no support and in contact with either one of the positive electrode mixture layer and the negative electrode mixture layer is at least 1.5 times or more and 5 times or less the film thickness of the other solid electrolyte layer having no support. The method can be preferable in the case of a solid electrolyte laminate having a large degree of warpage when a solid electrolyte sheet having self-support strength is used.

At that time, the solid electrolyte laminate formed of the two solid electrolyte layers having substantially no support and same thickness may be used as a solid electrolyte sheet having self-supportive strength by removing the sheet and the film serving as a base material. Alternatively, after transfer is made to either one of the positive electrode mixture layer and the negative electrode mixture layer, the sheet and the film may be removed.

The solid electrolyte layer and the laminate thereof according to the present invention is, if necessary, pressurized to compress the solid electrolyte material. In a case where the solid electrolyte is composed of particles, the binding between the particles is enhanced, and, at the same time, the opening of the support is desirably filled with the particles.

Examples of the method for pressurizing the solid electrolyte include, but are not particularly limited to, a method using a roll press, a flat plate press, and an isostatic press. Since pressure can be continuously applied, the roll press is preferable in view of improving the productivity of the solid electrolyte laminate.

When the solid electrolyte is pressurized, it is more preferable that the solid electrolyte is pressurized while heating. At this time, for example, a hot roll press, a hot plate press, and a hot isostatic press can be used. The temperature during the pressurization, which varies depending on the material for the support and the type of the solid electrolyte, is, for example, 60 to 250°C.

The pressure for pressurizing the solid electrolyte layer and the laminate thereof is, for example, 30 to 1000 MPa if e.g., a plate press and isostatic press is employed. If the roll press is employed, the linear pressure thereof is, for example, 0.1 to 5 ton/cm.

### <<Slurry or Solution of Solid Electrolyte and Method for Preparing Solid Electrolyte Layer Using Same>>

The solid electrolyte slurry or solution contains a solid electrolyte, a solvent (the concept of "solvent" in the specification includes a dispersion medium) for dispersing or dissolving the solid electrolyte, and additives (commonly known additives such as a binder and a thickener) to be added if necessary.

As the solvent, it is preferable to use a solvent that can satisfactorily disperse or dissolve the solid electrolyte and the additives and does not greatly affect the battery characteristics provided by the solid electrolyte and the support. Examples of the solvent include methyl alcohol, ethyl alcohol, 1-propyl alcohol, 2-butanol, ethylene glycol, propylene glycol, glycerin, 1,6-hexanediol, 1,3-butanediol, 1,4-butanediol, ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol dimethyl ether, dipropylene glycol monomethyl ether, tripropylene glycol monomethyl ether, diethylene glycol monobutyl ether, diethylene glycol dibutyl ether, dimethyl ether, diethyl ether, and dibutyl ether, tetrahydrofuran, dioxanes, N,N-dimethylformamide, 1-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, triethylamine, tributylamine, acetone, methyl ethyl ketone, diethyl ketone, dipropyl ketone, dibutyl ketone, diisobutyl ketone, methyl acetate, ethyl acetate, propyl acetate, butyl acetate, pentyl acetate, hexyl acetate, methyl propionate, ethyl propionate, propyl propionate, butyl propionate, methyl butyrate, ethyl butyrate, propyl butyrate, butyl isobutyrate, isobutyl isobutyrate, pentyl butyrate, methyl valerate, ethyl valerate, propyl valerate, butyl valerate, methyl caproate, ethyl caproate, propyl caproate, butyl caproate, hexene, heptene, cyclohexene, toluene, ortho-, meta-xylenes, decalin, 1,2,3,4-tetrahydronaphthalene, mesitylene, methoxybenzene, hexane, pentane, heptane, 2-ethylhexane, methylcyclohexane, ethylcyclohexane, decalin, octane, nonane, decane, pentane, cyclopentane, cyclooctane, acetonitrile, propyronitrile, and butyronitrile.

In particular, when a sulfide solid electrolyte is used, a low-polarity solvent having low reactivity with the sulfide solid electrolyte is preferable. Examples of the low-polarity solvent include hexane, pentane, 2-ethylhexane, heptane, octane, nonane, decane, cyclohexane, hexene, heptene, cyclohexene, toluene, xylene, decalin, 1,2,3,4-tetrahydronaphthalene, mesitylene, and methoxybenzene.

The above-mentioned solvents may be used singly or in combination of two or more types thereof. In addition, the moisture content of the solvent is preferably low. The moisture content is preferably 50 ppm by mass or less, more preferably 30 ppm by mass or less, still more preferably 10 ppm by mass or less. The closer to 0 ppm by mass, the more preferable. In particular, when a sulfide solid electrolyte is used, the moisture content is preferably low.

Examples of a method of applying the solid electrolyte slurry or solution include commonly known methods such as a doctor blade coating method, an immersion coating method, a spin coating method, a comma coating method, a gravure coating method, a spray coating method, and a bar coater coating method.

In the case of preparing the solid electrolyte layer by use of a commonly known wet coating method, for example, an existing thickener may be added for adjusting, e.g., viscosity. Examples of the thickener include a cellulose compound including carboxymethyl cellulose, methyl cellulose, ethyl cellulose, and hydroxypropyl cellulose; an ammonium salt or alkali metal salt of the cellulose compound; polyvinyl alcohol-based polymer such as polyvinyl alcohol, modified polyvinyl alcohol, or ethylene-vinyl alcohol copolymer, or copolymer thereof; saponified product of a copolymer of unsaturated carboxylic acid such as (meth)acrylic acid, maleic acid, or fumaric acid and vinyl ester,

The solid electrolyte layer can be obtained by applying the solid electrolyte slurry or solution and then drying to remove the solvent. The drying temperature is, for example, preferably 30 to 300°C, more preferably 60 to 250°C, and particularly preferably 70 to 200°C. It may be dried in vacuum or under reduced pressure. By heating in such a temperature range, it is easy to suppress deterioration of the solid electrolyte and the support.

### [Positive Electrode]

The positive electrode acts as a positive electrode of the solid-state secondary battery, and may be a known positive electrode. A preferred positive electrode contains a positive electrode active material and a solid electrolyte, and optionally contains a conductive aid, a binder, and additives similar to those that can be contained in the solid electrolyte layer.

The positive electrode preferably contains a material capable of electrochemically occluding and releasing ions as the positive electrode active material. This is because a high voltage and a high energy density tend to be obtained. Examples of such a material include Li-containing compounds represented by the following general formulas (2a) and (2b):

LiₓMO₂ (2a)

Li_{y}M₂O₄ (2b)

{wherein M is each independently one or more metals selected from transition metals, x is a number of 0 to 1.3, and y is a number of 0 to 2. } and other Li-containing compounds.

Examples of the Li-containing compounds represented by the general formulas (2a) and (2b) include lithium cobalt oxides represented by LiCoO₂; lithium manganese oxide represented by LiMnO₂, LiMn₂O₄, and Li₂Mn₂O₄; lithium nickel oxide represented by LiNiO₂; and a lithium-containing composite metal oxide represented by Li_{z}MO₂ (wherein M is one or more elements selected from the group consisting of Ni, Mn, Co, Al, and Mg, and z is a number more than 0.9 and less than 1.2). If necessary, another metal element may be further added to M.

As the other Li-containing compounds, any compound may be used as long as it contains Li. Examples of the other Li-containing compounds include composite oxides containing Li and a transition metal element, metal chalcogenides containing Li, phosphate compounds containing Li and a transition metal element, and metal silicate compounds containing Li and a transition metal element (for example, LiₜMᵤSiO₄, M is the same as defined in the above formula (2a), t is a number of 0 to 1, and u is a number of 0 to 2). In view of obtaining a higher voltage, the other Li-containing compound is particularly preferably a composite oxide containing Li and one or more transition metal elements selected from the group consisting of cobalt (Co), nickel (Ni), manganese (Mn), iron (Fe), copper (Cu), zinc (Zn), chromium (Cr), vanadium (V), and titanium (Ti), and a phosphoric acid compound.

More specifically, as the other Li compound, a composite oxide containing Li and a transition metal element, a metal chalcogenide containing Li and a transition metal element, and a metal phosphate compound having Li are more preferable, and a composite oxide containing Li and a transition metal element and a metal phosphate compound having Li are further preferable. Examples thereof include compounds represented by the following general formulas (3a) and (3b):

LiᵥM^{I}O₂ (3a)

Li_{w}M^{II}PO₄ (3b)

{wherein M^{I} and M^{II} are each one or more transition metal elements, the values of v and w vary depending on the charge/discharge state of the battery, v is a number of 0.05 to 1.10, and w is a number of 0.01 to 1.10.}.

The compound represented by the general formula (3a) has a layered structure, and the compound represented by the general formula (3b) has an olivine structure. In view of, for example, stabilizing the structure, these compounds may be compounds in which a part of a transition metal element is substituted with Al, Mg, or another transition metal element, compounds in which these metal elements are contained in a crystal grain boundary, compounds in which a part of oxygen atoms is substituted with, e.g., fluorine atoms, or compounds in which at least a part of the surface of the positive electrode active material is coated with another positive electrode active material.

As the positive electrode active material, the Li-containing compound as described above may be used alone, or other positive electrode active materials may be used in combination with the Li-containing compound.

Examples of such other positive electrode active materials include a metal oxide or a metal chalcogenide having a tunnel structure and a layered structure; sulfur; and conductive polymers. Examples of the metal oxide or metal chalcogenide having a tunnel structure and a layered structure include oxides, sulfides, and selenides of metals except lithium represented by MnO₂, FeO₂, FeS₂, V₂O₅, V₆O₁₃, TiO₂, TiS₂, MoS₂, and NbSe₂. Examples of the conductive polymer include conductive polymers represented by polyaniline, polythiophene, polyacetylene, and polypyrrole.

As the positive electrode active material in the present embodiment, a material obtained by applying an arbitrary coating to the surface of the positive electrode active material may be used. Examples of the material to be coated include, but are not limited to, an ion conductive material containing Li, Nb, P, and O. The positive electrode active material is used singly or in combination of two or more types thereof.

The mass ratio of the positive electrode active material in the positive electrode mixture layer is preferably 60 mass% or more, more preferably 70 mass% or more, and still more preferably 80 mass% or more. The average particle size (primary particle size) of the positive electrode active material is preferably 0.05 to 100 µm, more preferably 1 to 20 µm, and still more preferably 2 to 15 µm. The average particle size of the positive electrode active material can be measured by an existing particle size analyzer (for example, a laser diffraction/scattering type particle size distribution meter, or a dynamic light scattering type particle size distribution meter).

Examples of the solid electrolyte may include the same solid electrolyte as the solid electrolyte used in the solid electrolyte layer, and may be the same solid electrolyte as the solid electrolyte layer has. The mass ratio of the solid electrolyte is preferably 8 to 40 mass%, more preferably 12 to 35 mass%, and still more preferably 15 to 30 mass%.

Examples of the conductive aid include carbon black represented by graphite, acetylene black, and Ketjen black, activated carbon, various cokes, and carbon fibers such as carbon nanotubes. A metal powder such as aluminum, titanium, or stainless steel may be used. The number average particle diameter (primary particle diameter) of the conductive aid is preferably 10 nm to 10 µm, and more preferably 20 nm to 1 µm. The number average particle diameter of the conductive aid is measured in the same manner as the number average particle diameter of the positive electrode active material. The mass ratio of the conductive aid is preferably 0.5 to 10 mass%, more preferably 0.8 to 6 mass%, and still more preferably 1.1 to 4 mass%.

Examples of the binder include those similar to the binder species that may be contained in the solid electrolyte layer, and may be the same as those contained in the solid electrolyte layer. The mass ratio of the binder is preferably 0 to 4 mass%, more preferably 0.3 to 3 mass%, and still more preferably 0.6 to 2 mass%.

The positive electrode is obtained, for example, as follows. First, a positive electrode mixture-containing slurry is prepared by dispersing a positive electrode mixture, which is prepared by adding, if necessary, a conductive aid, a binder, an additive, and others to a predetermined amount of the positive electrode active material and the solid electrolyte and mixing them, in a solvent. The solvent is not particularly limited, and a conventionally known solvent may be used, but the solvents exemplified in the case where the solid electrolyte layer is prepared by wet coating method can be suitably used. Next, the positive electrode mixture-containing slurry is applied onto a positive electrode current collector and dried to form a positive electrode mixture layer.

The positive electrode current collector is formed of, for example, a metal foil such as an aluminum foil, a nickel foil, a titanium foil, or a stainless steel foil, or a resin sheet containing a conductive material and having conductivity. The surface of the positive electrode current collector may be coated with carbon, and may be processed in the form of mesh or foam. The thickness of the positive electrode current collector is preferably 5 to 35 µm, more preferably 7 to 30 µm, and still more preferably 9 to 25 µm.

The positive electrode can be produced, for example, by applying the positive electrode mixture-containing slurry to the current collector and drying the slurry. The production, application, and drying of the slurry can be performed by conventionally known methods.

Examples of the method for producing a slurry include a method using a rotation-revolution mixer, a planetary mixer, a bead mill, and a thin-film swirl mixer. Examples of a method for applying the slurry include a commonly known method such as a doctor blade coating method, an immersion coating method, spin coating, comma coating, gravure coating, a spray coating method, and a bar coater coating method.

The positive electrode mixture layer dried is compressed by e.g., roll pressing, if necessary, to obtain a positive electrode having the positive electrode mixture layer formed on the positive electrode current collector. The thickness of the positive electrode mixture compressed is preferably 10 to 400 µm, more preferably 20 to 350 µm, and still more preferably 30 to 300 µm.

### [Negative Electrode]

The negative electrode may be a negative electrode of a solid-state secondary battery that electrochemically occludes and releases ions or a commonly known negative electrode. A preferred negative electrode contains a negative electrode active material and a solid electrolyte, and optionally contains a conductive aid, a binder, and additives similar to those that can be contained in the solid electrolyte layer.

The negative electrode preferably contains one or more materials selected from the group consisting of a material capable of occluding and releasing Li ions and metal Li as a negative electrode active material. Examples of such a material include carbon materials represented by metal Li, amorphous carbon (hard carbon), artificial graphite, natural graphite, pyrolytic carbon, coke, glassy carbon, baked organic polymer compounds, mesocarbon microbeads, carbon fibers, activated carbon, graphite, carbon colloid, and carbon black; and a material containing an element capable of forming an alloy with Li. Examples of the coke include pitch coke, needle coke, and petroleum coke. The baked organic polymer compound is defined as a carbonized compound obtained by baking a polymer material such as a phenol resin or a furan resin at an appropriate temperature. The carbon material may contain, a heterogeneous element or a heterogeneous compound such as O, B, P, N, S, Si, SiC, SiO, SiO₂, or B₄C except carbon. The content of the heterogeneous element or the heterogeneous compound is preferably 0 to 10 mass%.

The material containing an element capable of forming an alloy with Li can be a metal or a semimetal itself, an alloy, or compound and may have one or two or more phases thereof in at least a part thereof.

In the specification, the "alloy" includes one composed of two or more types of metal elements and one having one or more types of metal elements and one or more types of metalloid elements. If the alloy has metal properties as a whole, the alloy may have a nonmetallic element. In the alloy structure, a solid solution, a eutectic (eutectic mixture), an intermetallic compound, or two or more types thereof can coexist.

Examples of the metal element and metalloid element capable of forming an alloy with Li include titanium (Ti), tin (Sn), lead (Pb), aluminum (Al), indium (In), silicon (Si), zinc (Zn), antimony (Sb), bismuth (Bi), gallium (Ga), germanium (Ge), arsenic (As), silver (Ag), hafnium (Hf), zirconium (Zr), and yttrium (Y). Of them, metal elements and metalloid elements of Group 4 or Group 14 in the long periodic table are preferable. Particularly preferred is titanium, silicon or tin highly capable of occluding and releasing Li and obtaining a high energy density.

Examples of the alloy of tin include alloys having, as the second constituent element other than silicon, one or more elements selected from the group consisting of silicon, magnesium (Mg), nickel, copper, iron, cobalt, manganese, zinc, indium, silver, titanium (Ti), germanium, bismuth, antimony, and chromium (Cr).

Examples of the alloy of silicon include alloys having, as the second constituent element other than silicon, one or more elements selected from the group consisting of magnesium, nickel, copper, iron, cobalt, manganese, zinc, indium, silver, titanium, germanium, bismuth, antimony, and chromium.

Examples of the titanium compound, the tin compound, and the silicon compound include those having oxygen (O) or carbon (C). In this case, the second constituent element described above may be contained in addition to titanium, tin, or silicon.

The negative electrode may contain a metal compound capable of occluding Li ions in the range of 0.4 to 3 V vs. Li/Li⁺as the negative electrode active material. Examples of such a metal compound include metal oxides, metal sulfides, and metal nitrides.

Examples of the metal oxide include titanium oxide, lithium titanium oxide (lithium titanium-containing composite oxide), tungsten oxide (for example, WO₃), amorphous tin oxide (for example, SnB_{0.4}P_{0.6}O_{3.1}), tin silicon oxide (for example, SnSiO₃), and silicon oxide (SiO). Of them, titanium oxide and lithium titanium oxide are preferable.

Examples of the lithium titanium oxide include lithium titanate having a spinel structure {for example, Li₄+aTi₅O₁₂ (in the formula, a can vary in a range of -1 ≤ a ≤ 3 by a charge-discharge reaction)} and lithium titanate having a ramsdellite structure {for example, Li₂+bTi₃O₇ (in the formula, b can vary in a range of -1 ≤ b ≤ 3 by a charge-discharge reaction)}.

As the titanium oxide, one containing Li or one not containing Li before charge and discharge can be used. Examples of the titanium oxide not containing Li before charge and discharge (during synthesis) include titanium oxide (for example, TiO₂, H₂Ti₁₂O₂₅), and a titanium composite oxide containing Ti and at least one element selected from the group consisting of P, V, Sn, Cu, Ni, and Fe. TiO₂ is preferably an anatase form having low crystallinity and a heat treatment temperature of 300 to 500°C. Examples of the titanium composite oxide include TiO₂-P₂O₅, TiO₂-V₂O₅, TiO₂-P₂O₅-SnO₂, and TiO₂-P₂O₅-MeO, (in the formula, Me is at least one element selected from the group consisting of Cu, Ni, and Fe). The titanium composite oxide preferably has low crystallinity and a microstructure in which a crystal phase and an amorphous phase coexist or an amorphous phase exists alone. Owing to such a microstructure, the cycle performance of the solid-state secondary battery can be significantly improved.

Examples of the titanium oxide containing Li before charge and discharge (at the time of synthesis) include Li_{c}TiO₂ (wherein 0 < c ≤ 1.1).

Examples of the metal sulfide include titanium sulfide (for example, TiS₂), molybdenum sulfide (for example,MoS₂), and iron sulfide (for example, FeS, FeS₂, and Li_{g}FeS₂ (wherein g is 0 ≤ g ≤ 1)). Examples of the metal nitride include lithium cobalt nitride (for example, Li_{d}CoₑN, 0 < d < 4, 0 < e < 0.5).

In the solid-state secondary battery in the present embodiment, in view of increasing the battery voltage, the negative electrode preferably contains, as the negative electrode active material, a material that occludes lithium ions at a potential lower than 0.4 V vs. Li/Li⁺. Examples of such a material include carbon materials represented by amorphous carbon (hard carbon), artificial graphite, natural graphite, graphite, pyrolytic carbon, coke, glassy carbon, baked organic polymer compounds, mesocarbon microbeads, carbon fibers, activated carbon, graphite, carbon colloid, and carbon black; and metal lithium, metal oxides, metal nitrides, lithium alloys, tin alloys, silicon alloys, intermetallic compounds, organic compounds, inorganic compounds, metal complexes, and organic polymer compounds.

The negative electrode active material is used singly or in combination of two or more types thereof. The mass ratio of the negative electrode active material in the negative electrode mixture layer is preferably 50 mass% or more, more preferably 60 mass% or more, and still more preferably 65 mass% or more.

The number average particle size (primary particle size) of the negative electrode active material is preferably 0.1 to 30 µm, and more preferably 1 to 20 µm. The number average particle size of the negative electrode active material is measured in the same manner as in the number average particle size of the positive electrode active material. As the solid electrolyte, the conductive aid, the binder, and the additive that can be contained in the negative electrode, those similar to those that can be used for the above-described positive electrode mixture layer can be used.

The mass ratio of the solid electrolyte is preferably 10 to 50 mass%, more preferably 15 to 40 mass%, and still more preferably 20 to 35 mass%. The mass ratio of the conductive aid is preferably 0 to 10 mass%, more preferably 0.5 to 6 mass%, and still more preferably 1 to 4 mass%. The mass ratio of the binder is preferably 0 to 5 mass%, more preferably 0.5 to 4 mass%, and still more preferably 1 to 3 mass%.

The negative electrode is obtained, for example, as follows. First, a negative electrode mixture-containing slurry is prepared by dispersing a negative electrode mixture, which is prepared by adding, if necessary, a conductive aid, a binder, an additive, and others to a predetermined amount of the negative electrode active material and the solid electrolyte and mixing them, in a solvent. The solvent is not particularly limited, and conventionally known solvents may be used, but the solvents exemplified when the solid electrolyte layer is prepared by wet coating method can be suitably used. Next, the negative electrode mixture-containing slurry is applied onto a negative electrode current collector and dried to form a negative electrode mixture layer.

The negative electrode current collector is formed of, for example, a metal foil such as a copper foil, a nickel foil, or a stainless steel foil. The negative electrode current collector may have a surface coated with carbon or processed into a mesh shape. The thickness of the negative electrode current collector is preferably 5 to 40 µm, more preferably 6 to 35 µm, and still more preferably 7 to 30 µm.

Examples of a method for applying the slurry include a commonly known method such as a doctor blade coating method, an immersion coating method, spin coating, comma coating, gravure coating, a spray coating method, and a bar coater coating method.

The negative electrode mixture layer dried is compressed by, e.g., roll pressing, if necessary, to obtain a negative electrode having the negative electrode mixture layer formed on the negative electrode current collector. The thickness of the negative electrode mixture layer compressed is preferably 10 to 300 µm, more preferably 20 to 280 µm, and still more preferably 30 to 250 µm.

### [Exterior of Solid-state Secondary Battery]

The configuration of the exterior of the solid-state secondary battery is not particularly limited, but for example, either one of the exteriors of a battery, a battery can and a laminate film exterior body, can be used. As the battery can, for example, a metal can made of steel or aluminum can be used. As the laminate film exterior body, for example, a laminate film having a three-layer structure of a hot-melt resin/a metal film/a resin can be used. In this case, two sheets of laminate films are stacked with the hot-melt resin side facing inward, and the end portion is sealed by heat sealing.

When the laminate film exterior body is used, a positive electrode terminal (or a lead tab connected to the positive electrode terminal) and a negative electrode terminal (or a lead tab connected to the negative electrode terminal) are connected to the positive electrode current collector and the negative electrode current collector, respectively, and the laminate film exterior body may be sealed in a state where end portions of the both terminals (or the lead tabs) are drawn out to the outside of the exterior body.

### [Method for Preparing Solid-state Secondary Battery]

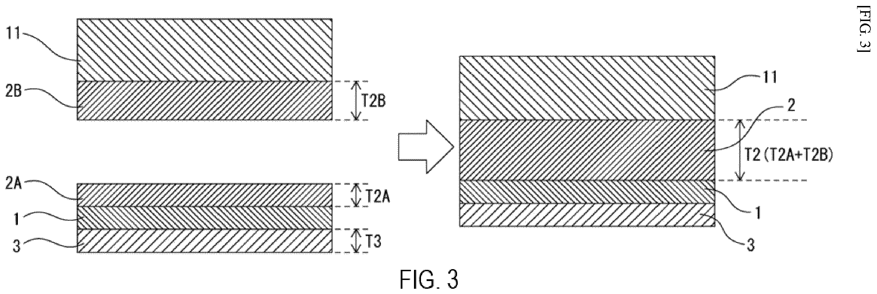

Fig. 3 is a view showing how to manufacture a solid electrolyte laminate 4 according to an embodiment of the present invention. An aspect of the present invention is directed to a method for manufacturing the solid-state secondary battery, having the following steps:
(1) providing the second B electrolyte layer 2B having no support to either of a positive electrode mixture layer or a negative electrode mixture layer (represented by reference numeral "11" in the drawing);
(2) forming are first electrolyte layer 1 having a support and then providing the second A electrolyte layer 2A and the third electrolyte layer 3 {note that the film thickness (T2A) of the second A electrolyte layer is substantially equal to the film thickness (T3) of the third electrolyte layer} having no support so as to sandwich the first electrolyte layer 1 to obtain a laminate precursor; and
(3) laminating the positive electrode mixture layer, the laminate precursor 4, and the negative electrode mixture layer so that the second A electrolyte layer 2A and the second B electrolyte layer 2B face each other to make a total film thickness (T2; T2A+T2B) of the second A electrolyte layer 2A and the second B electrolyte layer 2B to be 1.5 to 5 times as large as a film thickness (T3) of the third electrolyte layer 3. According to this method, the secondary battery can be suitably prepared.

In the above manufacturing method, the second B electrolyte layer prepared in the step (1) and the second A electrolyte layer prepared in the step (2) are laminated in the step (3) to obtain a second electrolyte layer (second electrolyte layer 2 shown in Fig. 1). The phrase "substantially equal" in the step (2) means that the ratio (T2A/T3) of the film thickness (T2A) of the second A electrolyte layer to the film thickness (T3) of the third electrolyte layer 3 is 0.85 or more or 0.95 or more and 1.15 or less or 1.05 or less.

The solid-state secondary battery of the present embodiment has at least the solid electrolyte laminate of the present embodiment between the positive electrode and the negative electrode. If a solid electrolyte layer which is positioned on one of the surface sides of the solid electrolyte laminate having no support and a larger film thickness suppresses a short circuit due to deposition of lithium metal, the solid electrode layer may be used in contact with a negative electrode mixture layer, whereas, if the solid electrolyte layer suppresses a decrease in battery capacity due to local deterioration of the positive electrode active material, the solid electrolyte layer may be used in contact with a positive electrode mixture layer.

A positive electrode or a negative electrode, which is prepared by attaching a solid electrolyte layer having no support to either one of the positive electrode mixture layer and the negative electrode mixture layer may be laminated in the same manner in contact with a solid electrolyte sheet, which is a solid electrolyte sheet having the same thickness as that of the solid electrolyte layer, which has no support within the range where warpage of the solid electrolyte laminate substantially does not cause a problem, and has a self-supportive strength. A method of bringing them into contact is, for example, as follows: The positive electrode, the solid electrolyte sheet, and the negative electrode are laminated and, if necessary, wrapped by, e.g., a laminate-film exterior body, and then, pressed by, e.g., a roll press, a flat press, a cold isostatic press, or a warm isostatic press.

Subsequently, the laminate is housed in a battery case (battery exterior) and sealed. In this manner, the solid-state secondary battery according to the present embodiment can be prepared. The shape of the solid-state secondary battery of the present embodiment is not particularly limited. Examples of the shape suitably employed include a cylindrical shape, an elliptical shape, a square cylindrical shape, a button shape, a coin shape, a flat shape, and a laminate shape.

The solid-state secondary battery of the present embodiment can function as a battery by initial charging. The method of the initial charging in the present embodiment is not particularly limited, but the initial charging is preferably performed at 0.01 to 1 C, more preferably performed at 0.05 to 0.5 C, and still more preferably performed at 0.1 to 0.2 C. Note that 1 C refers to a current capable of discharging a predetermined rated capacity (capacity corresponding to full charge) of the battery in one hour. The initial charging may be performed a plurality of times.

A plurality of the solid-state secondary batteries of the present embodiment can be connected in series or in parallel and used as a battery pack. In view of controlling the charge/discharge state of the battery pack while suppressing deterioration of the active material and the solid electrolyte, the operating voltage range per battery pack is preferably 2.25 to 5 V, more preferably 2.5 to 4.75 V, and particularly preferably 2.75 V to 4.5 V.

### Examples

Hereinafter, the present invention will be described by way of Examples. Note that in the following Examples, the embodiment illustrated in Fig. 3 will be described. However, the present invention is not limited only to these Examples.

### [Example 1]

### [Preparation of Laminate Precursor]

Powder (average particle diameter: 3 µm) of an argyrodite form sulfide solid electrolyte Li₇₋ₓPS₆₋ₓClₓ (wherein x ≈ 1) as a sulfide solid electrolyte, and;
a binder solution prepared by dissolving 5 mass% of a rubber-based resin in 100 mass% of a low-polarity organic solvent that does not react with the sulfide solid electrolyte,
were prepared. Then, the sulfide solid electrolyte and the rubber-based resin were weighed so as to satisfy a mass ratio of 96.0: 4.0. The low-polarity organic solvent was further added to this for controlling the viscosity. The mixture was kneaded by a rotation-revolution mixer to obtain a solid electrolyte slurry.

A polyethylene terephthalate (PET) film having a thickness of about 38 µm and a release-treated surface and serving as a base material was placed on a tabletop coating machine with the release-treated surface faced upward. Then, the solid electrolyte slurry was applied to the release-treated surface using an applicator while keeping a predetermined clearance. Then, this was dried by a dryer at a temperature of 70°C under normal pressure for one hour, thereby obtaining a sheet having the solid electrolyte layer laminated on the PET film. Next, the sheet was placed on a tabletop coating machine with the solid electrolyte layer faced upward, and a glass fiber woven fabric (support: fiber assembly width of about 84 µm, interval between fiber assembly widths of about 179 µm, thickness of about 18 µm, and opening ratio of about 46%) was placed thereon. Subsequently, the solid electrolyte slurry was further applied on the glass fiber woven fabric using an applicator while keeping a predetermined clearance. Then, this was dried by a dryer at a temperature of 70°C under normal pressure for one hour, and then depressurized and dried by a dryer at a temperature of 70°C for 20 hours. In this manner, a laminate precursor (Example 1) having the solid electrolyte layer, the glass fiber woven fabric-containing solid electrolyte layer, and the solid electrolyte layer laminated in this order on the PET film, was obtained.

### [Preparation of Solid Electrolyte Sheet]

The laminate precursor obtained on the PET film was pressed at a pressure of 392 MPa to remove the PET film from the laminate. As a result, a solid electrolyte sheet having self-supportive strength and no warpage was obtained.

### (Preparation of Positive Electrode)

A powder of LiNi_{0.5}Co_{0.2}Mn_{0.3}O₂ (average particle size: 5 µm) having a composite oxide of Li and Nb formed on a surface thereof as a positive electrode active material; and
a powder (average particle diameter: 0.6 µm) of an argyrodite-form sulfide solid electrolyte Li₇₋ₓPS₆₋ₓClₓ (wherein x ≈ 1);
a carbon fiber ("VGCF" (trade name) manufactured by Resonac Corporation) as a conductive aid; and
a binder solution prepared by dissolving 5 mass% of a rubber-based resin in 100 mass% of a low-polarity organic solvent that does not react with the sulfide solid electrolyte,
were prepared. Then, the positive electrode active material, the sulfide solid electrolyte, the carbon fiber, and the rubber-based resin were weighed so as to satisfy a mass ratio of 82.7: 15.3: 1.2: 0.8. The low-polarity organic solvent was further added for controlling viscosity. The resulting mixture was kneaded by a rotation-revolution mixer to obtain a positive electrode slurry.

An aluminum foil having a thickness of 20 µm was placed on a tabletop coating machine, and the positive electrode slurry was applied using an applicator while keeping a predetermined clearance. Then, this was dried by a dryer at a temperature of 100°C under normal pressure for one hour, and then dried by a dryer at a temperature of 100°C under reduced pressure for 20 hours to obtain a positive electrode.

### (Preparation of Negative Electrode)

A natural graphite powder (average particle size: 16 µm) as a negative electrode active material; and;
a powder (average particle diameter: 0.6 µm) of an argyrodite form sulfide solid electrolyte Li₇₋ₓPS₆₋ₓClₓ (wherein x ≈ 1);
a binder solution prepared by dissolving 5 mass% of a rubber-based resin in 100 mass% of a low-polarity organic solvent that does not react with the sulfide solid electrolyte;
were prepared. Then, the negative electrode active material, the sulfide solid electrolyte, and the rubber-based resin were weighed so as to satisfy a mass ratio of 67.5: 30.5: 2. The above-described low-polarity organic solvent was further added for controlling viscosity. The resulting mixture was kneaded by a rotation-revolution mixer to obtain a negative electrode slurry.

A stainless-steel foil having a surface coated with carbon and a total thickness of 10 µm was placed on a tabletop coating machine. Then, the negative electrode slurry was applied to the carbon-coated surface using an applicator while keeping a predetermined clearance. Then, this was dried by a dryer at a temperature of 100°C under normal pressure for one hour, and then dried by a dryer at a temperature of 100°C under reduced pressure for 20 hours to obtain a negative electrode.

### [Preparation of Solid Electrolyte Layer to be Attached to Negative Electrode Mixture Layer]

A stainless-steel foil having a surface coated with carbon and a total thickness of 10 µm was placed on a tabletop coating machine. Then, the same solid electrolyte slurry as used for preparing the solid electrolyte sheet was applied to the carbon-coated surface using an applicator while keeping a predetermined clearance. Then, this was dried by a dryer at a temperature of 70°C under normal pressure for one hour to obtain a sheet having the solid electrolyte layer laminated on the stainless-steel foil.

The negative electrode was placed on a work of a roll press such that the negative electrode mixture layer faced upward, the stainless-steel foil was placed thereon such that the negative electrode mixture layer and the solid electrolyte layer were in contact with each other, and roll pressing was performed to transfer the solid electrolyte layer to the negative electrode mixture layer. As a result, a negative electrode consisting of the negative electrode collector foil, the negative electrode mixture layer, and the solid electrolyte layer, was obtained.

### [Preparation of Solid-state Secondary Battery]

The positive electrode, the negative electrode, and the solid electrolyte sheet were each punched into a predetermined size. Then, the positive electrode mixture layer, the solid electrolyte sheet, and the negative electrode mixture layer were stacked in this order to obtain a laminate. The obtained laminate was wrapped with a stainless-steel foil, the resulting laminate was further wrapped with an aluminum laminate film, and sealed under reduced pressure to house the laminate in a packaging material. Densification of the laminate housed in the packaging material and pressing of the joint surface were performed using a technique based on warm isostatic pressing.

After the pressed laminate was taken out from the packaging material, lead tabs were ultrasonically welded to the positive electrode and the negative electrode, respectively. Subsequently, the laminate with the lead tabs attached was wrapped with an aluminum laminate and sealed under reduced pressure to produce a solid-state secondary battery.

### [Structure of Solid Electrolyte Laminate]

The obtained solid-state secondary battery was cut with a sharp razor blade, and then the cross section was smoothed by a cross section polisher using an argon ion beam in a non-atmospheric exposure environment, and the cross section was observed by a SEM. The film thicknesses of individual layers of the solid electrolyte laminate were as follows: the film thickness of the layer in contact with the positive electrode mixture layer (layer having no support) was 10 µm; the film thickness of the layer having a support of a glass woven fabric was 10 µm; and the film thickness of the layer in contact with the negative electrode mixture layer (layer having no support) was 35 µm.

### [Evaluation on Charge-Discharge of solid-state secondary battery]

The solid-state secondary battery prepared was restrained with a restraining device made of stainless steel so that the restraint pressure applied to the cell was 0.15 ton/cm². In this state, charge and discharge were evaluated.

### (Initial Charge and Discharge)

In this section, "initial charge and discharge", a 1 C current was determined based on a reference capacity of 204 mAh/g at 4.35 V of the positive electrode active material. Note that "1.0 C", which is a current value of 1 C, is a current value at which a fully charged battery can discharge an electric quantity in one hour.

In a thermostatic bath of a constant temperature of 25°C, the battery was charged at a constant current of 0.1 C, and then at a constant voltage of 4.35 V until the final current reached 0.01 C using a charge and discharge apparatus (manufactured by Toyo System Co., Ltd., product name: TOSCAT-3000). Thereafter, the battery was discharged at a constant current of 0.1 C, and then at a constant voltage of 3.0 V until the final current reached 0.01 C (charge and discharge at the first cycle). Charge and discharge of the second cycle and the third cycle were performed in the same conditions as in the first cycle.

### (Evaluation of Charge Load Characteristics)

In this section, "Evaluation of Charge Load Characteristics", the discharge capacity from full charge to 3.0 V in the 0.1 C constant current discharge at the third cycle of the initial charge/discharge was determined as the rated capacity of the battery. Based on the rated capacity, 1 C current was determined. The 1C current in this charge load characteristic evaluation was about 2.9 mA/cm² in terms of current density.

After the initial charge-discharge, the battery was discharged at a constant current of 0.1 C using the charge-discharge apparatus in the same thermostatic bath of 25°C, and then charged at a constant voltage of 4.35 V until the final current reached 0.01 C. Thereafter, the battery was discharged at a constant current of 0.1 C, and then at a constant voltage of 3.0 V until the final current reached 0.01 C. Charge-discharge efficiency (%) = [(discharge capacity)/(charge capacity)] × 100 at this time was 99.8%.

Thereafter, the battery was charged at a constant current of 1 C until the final voltage reached 4.35 V, and then discharged at a constant current of 0.1 C, and then at a constant voltage of 3.0 V until the final current reached 0.01 C (charge and discharge condition A). The charge-discharge efficiency at this time was 100.0%.

Thereafter, charge and discharge were repeatedly performed in the same charge and discharge condition A except that the current value of charging was changed to 2 C, 3 C, 4 C, 5 C, and 6 C. The charge/discharge efficiencies at individual charge current values are shown in Table 1. Note that when the charge-discharge efficiency at each charge current was less than 95% or when a voltage drop of 40 mV or more occurred during charging, it was determined that the battery was short-circuited. The results of the charge and discharge evaluation are shown in Table 1. A result of 95% or more of charge-discharge efficiency was obtained up to 5 C (about 14.4 mA/cm²). It was found that the battery has high short-circuit resistance even at a high current density.

### [Example 2]

A solid-state secondary battery was prepared in the same manner as in Example 1 except that a nonwoven fabric (support: average fiber diameter of about 7 µm, thickness of about 22 µm, and basis weight of 5 g/m²) made of a PET resin was used as a support in place of a glass woven fabric.

The film thicknesses of individual layers in the solid electrolyte laminate were as follows: The film thickness of the layer in contact with the positive electrode mixture layer (layer having no support) was 9 µm; the film thickness of the layer having the support of the PET nonwoven fabric was 27 µm; and the film thickness of the layer in contact with the negative electrode mixture layer (layer having no support) was 25 µm.

The results of charge and discharge evaluated in the same manner as in Example 1 are shown in Table 1. A result of 95% or more of charge-discharge efficiency was obtained up to 5 C (about 14.4 mA/cm²). It was found that the battery has high short-circuit resistance even at a high current density.

### [Comparative Example 1]

A solid-state secondary battery was prepared in the same manner as in Example 1 except that the solid electrolyte layer was not attached to the negative electrode mixture layer.

The film thicknesses of individual layers in the solid electrolyte laminate were as follows: The film thickness of the layer in contact with the positive electrode mixture layer (layer having no support) was 10 µm; the film thickness of the layer having a support of a glass woven fabric was 11 µm; and the film thickness of the layer in contact with the negative electrode mixture layer (layer having no support) was 11 µm.

The results of charge and discharge evaluated in the same manner as in Example 1 are similarly shown in Table 1. As a result, the voltage suddenly dropped during 3 C charging and a short circuit occurred. After the short circuit, the voltage did not rise. It became difficult to charge the battery any further. As described above, in Comparative Example 1, it was found that a short circuit easily occurs with an increase of current density.

### [Comparative Example 2]

A solid-state secondary battery was prepared in the same manner as in Example 2 except that the solid electrolyte layer was not attached to the negative electrode mixture layer.

The film thicknesses of individual layers in the solid electrolyte laminate were as follows: the film thickness of the layer in contact with the positive electrode mixture layer (layer having no support) was 7 µm; the film thickness of the layer having the support of the PET nonwoven fabric was 27 µm, and the film thickness of the layer in contact with the negative electrode mixture layer (layer having no support) was 9 µm.

The results of charge and discharge evaluated in the same manner as in Example 1 are similarly shown in Table 1. As a result, the charge-discharge efficiency was less than 95% in 3 C charging, and after 5 C charging, the voltage rapidly dropped to cause a short circuit. After the short circuit, the voltage did not rise. It became difficult to charge the battery any further. From this, it was found that a short circuit easily occurs with an increase of current density, in Comparative Example 2.

### [Comparative Example 3]

A solid-state secondary battery was prepared in the same manner as in Example 1 except that the thickness of the solid electrolyte layer to be attached to the negative electrode mixture layer was increased. However, the negative electrode to which the thicker solid electrolyte layer warped. Due to the warpage, when the laminate was placed in the packaging material and pressed, the surface of the packaging material wrinkled.

The film thicknesses of individual layers in the solid electrolyte laminate were as follows: the film thickness of the layer in contact with the positive electrode mixture layer (layer having no support) was 9 µm; the film thickness of the layer having a support of a glass woven fabric was 11 µm; and the film thickness of the layer in contact with the negative electrode mixture layer (layer having no support) was 52 µm.

Charge-discharge was evaluated in the same manner as in Example 1. As a result, a voltage dropped immediately after the initial charge-discharge was started and the voltage did not rise. It became difficult to charge the battery any further. From this, it was found that it is difficult for the battery of Comparative Example 3 to function as a battery.

Note that in the aspect where the solid electrolyte layer to be attached to the negative electrode mixture layer is thick as in Comparative Example 3, it was also confirmed that a short circuit frequently occurs in an extremely early stage of the initial charge and discharge at a low current density. In this aspect, a crack is often observed in the solid electrolyte layer. It is presumed that the crack is a cause of a short circuit in the early stage.

### [Comparative Example 3A]

A solid-state secondary battery was prepared in the same manner as in Example 1 except that the solid electrolyte layer was not attached to the negative electrode mixture layer and the clearance during the application by an applicator was changed.

The film thicknesses of individual layers in the solid electrolyte laminate were as follows: the film thickness of the layer in contact with the positive electrode mixture layer (layer having no support) was 20 µm, the film thickness of the layer having a support of a glass woven fabric was 12 µm, and the film thickness of the layer in contact with the negative electrode mixture layer (layer having no support) was 23 µm.

Charge-discharge evaluation was performed in the same manner as in Example 1. As a result, the voltage suddenly dropped during 2 C charging and a short circuit occurred. After the short circuit, the voltage did not rise. It became difficult to charge the battery any further. As described above, in Comparative Example 3A, it was found that a short circuit easily occurs with an increase of current density.

### [Example 3]

A solid-state secondary battery was prepared in the same manner as in Example 1 except that a solid electrolyte layer was attached not to the negative electrode mixture layer but to the positive electrode mixture layer.

The film thicknesses of individual layers in the solid electrolyte laminate were as follows: the film thickness of the layer in contact with the positive electrode mixture layer (layer having no support) was 34 µm, the film thickness of the layer having a support of a glass woven fabric was 11 µm; and the film thickness of the layer in contact with the negative electrode mixture layer (layer having no support) was 11 µm.

After completion of the initial charge-discharge, the temperature of the thermostatic bath was changed to 60°C. Then, a cycle of charging at a constant current of 1 C defined in the same as in the evaluation of charge load characteristics of Example 1 until the final voltage reached 4.35 V and then discharging until the final voltage reached 3.0 V was repeated 100 times. Thereafter, the temperature of the thermostatic bath was changed to 25°C, and the battery was charged at a constant current of 0.1 C and thereafter at a constant voltage of 4.35 V until the final current reached 0.01 C. Thereafter, the battery was discharged at a constant current of 0.1 C, and then at a constant voltage of 3.0 V until the final current reached 0.01 C. As a result, the residual capacity retention rate every 100 cycle when the rated capacity was set to 100% was confirmed at constant currents of 1 C and 0.1 C (charge and discharge condition B). A change in the residual capacity retention rate during charge and discharge at a constant current of 1 C when the charge and discharge condition B is repeated three times is shown in Table 2.

### [Comparative Example 4]

A solid-state secondary battery was prepared in the same manner as in Comparative Example 1, and the charge and discharge condition B was repeated three times in the same manner as in Example 3. A change in the residual capacity retention rate at that time is shown in Table 2.

Note that, "Reference Example" in Table 2 is a solid-state secondary battery having a solid electrolyte layer thickness of 26 µm and prepared in the same manner as in Example 1 except that the battery has no support.

After completion of the charge/discharge evaluation, the solid-state secondary battery was cut with a sharp razor blade, and then cross section was smoothed by a cross section polisher using an argon ion beam under a non atmospheric exposure environment. Thereafter, the cut piece was processed into flakes at a stage temperature of minus 130°C using a focused ion beam machining observation apparatus (VERSA 3D manufactured by FEI). Thereafter, the positive electrode active material at a position of several µm on the positive electrode mixture layer side from the solid electrolyte layer was observed with a scanning transmission electron microscope (JEM-ARM200F manufactured by JEOL Ltd.) equipped with a spherical aberration correction mechanism. For example, using the electron energy loss spectrum analyzer (GIF Quantum ER manufactured by Gatan) attached to the apparatus, the electronic state of the constituent elements in the cross section of the solid-state battery and the crystal structure reflecting the electronic state are observed.

Fig. 2 schematically illustrates a structure example of the cross section. As illustrated in the drawing, in the solid electrolyte laminate 4, the bundles 6 of the glass monofilaments 5 are present like dots in the plane direction. In the drawing, a space between these bundles 6 is illustrated as an opening 7, and a width along the plane direction of the bundle 6 is illustrated as a fiber assembly width 8. The positive electrode mixture layer 10 is in contact with the solid electrolyte laminate 4 in the plane direction. In the positive electrode mixture layer 10, a plurality of positive electrode active materials 9 are schematically shown. Of the positive electrode active materials 9, the positive electrode active material 9 positioned immediately below the bundle 6 in the thickness direction is denoted by reference numeral 8A as the "positive electrode active material positioned immediately below the center of the fiber assembly width", whereas, the positive electrode active material 9 positioned immediately below the opening 7 in the thickness direction is denoted by reference numeral 7A as the "positive electrode active material immediately below the center of the opening".

The shift amounts of the peak of electron energy loss spectra of Ni, Mn, and Co were measured in the positive electrode active materials 7A and 8A immediately below the center of the opening and immediately below the center of the fiber assembly width, respectively. Specifically, the measurement was performed from the outermost surface of the positive electrode active material 9 toward the inside thereof. The range from the surface where the peak shift was observed (corresponding to the range where the active material deteriorated) was analyzed. The range where an average peak shift with respect to Ni, Mn, and Co is recognized in average is shown below, together with the case of the positive electrode active material that has not yet subjected to a charge and discharge process, for each of the positive electrode active material 7A and 8A positioned immediately below the center of the opening 7 and immediately below the center of the fiber assembly width 8, respectively. That is, the peak shift was observed immediately below the center of opening 7 in the range of 5.7 nm and the peak shift was observed immediately below the center of fiber assembly width 8 in the range of 1.8 nm. In the cases not subjected to a charge-discharge process, the peak shifts were all observed in the range of 0.4 nm. It was confirmed that there was a large difference in the range where the peak shift was observed between immediately below the center of the opening and immediately below the center of the fiber assembly width. From this, it was found that the deterioration of positive electrode active material in the opening progressed. In other words, this is estimated as a reason why the residual capacity decreased.

**[Table 1]**

| Charge-Discharge Efficiency During Charge at individual rated capacity C and Discharge at 0.1 C | | | | |
|---|---|---|---|---|
| | Example 1 | Example 2 | Comparative Example 1 | Comparative Example 2 |
| 0.1 C | 99.8 % | 99.6 % | 99.8 % | 99.4 % |
| 1C | 100.0 % | 100.2 % | 99.9 % | 100.1 % |
| 2 C | 100.0 % | 100.2 % | 97.6 % | 98.5 % |
| 3 C | 98.6 % | 99.9 % | Voltage dropped | 87.4 % |
| 4 C | 96.5 % | 98.9 % | Voltage dropped | 68.7 % |
| 5 C | 97.0 % | 95.9 % | Voltage dropped | Voltage dropped |
| 6 C | 89.2 % | 87.2 % | Voltage dropped | Voltage dropped |

**[Table 2]**

| Residual Capacity Retention Ratio During Charge at 1 C and Discharge at 1 C | | | |
|---|---|---|---|
| Number of cycles | Example 3 | Comparative Example 4 | Reference Example |
| After 100 cycles | 85.2 % | 79.9 % | 84.3 % |
| After 200 cycles | 74.3 % | 65.9 % | 73.4 % |
| After 300 cycles | 68.8 % | 55.8 % | 67.2 % |

From the above, it was confirmed that the solid electrolyte laminates and the solid-state secondary batteries in Examples are excellent in short circuit suppression at the time of supplying a large amount of current and suppressed in capacity deterioration as compared to Comparative Examples.

### Industrial Applicability

The solid-state secondary battery using the solid electrolyte laminate of the present invention can be used for storage batteries of, e.g., electric vehicles, hybrid electric vehicles, electric motorcycles, electric bicycles, stationary power storage systems, mobile communication devices, portable electronic devices.

The present application is based on JP Application No. 2022-176682 filed on November 2, 2022, the disclosure of which is incorporated herein by reference in its entirety.

### Reference Signs List

- 1: Solid electrolyte layer having a support (first electrolyte layer)
- 2: Solid electrolyte layer having no support (second electrolyte layer)
- 3: Solid electrolyte layer having no support (third electrolyte layer)
- 4: Solid electrolyte laminate
- 5: Glass monofilament
- 6: Bundle in which glass monofilaments are assembled
- 7: Opening
- 7A: Positive electrode active material immediately below the center of opening
- 8: Fiber assembly width
- 8A: Positive electrode active material immediately below the center of fiber assembly width
- 9: Positive electrode active material
- 10: Positive electrode mixture layer
- 11: Positive electrode mixture layer or negative electrode mixture layer
- T2: Film thickness of solid electrolyte layer having no support (second electrolyte layer)
- T3: Film thickness of solid electrolyte layer having no support (third electrolyte layer)

## Claims

1. A solid electrolyte laminate in which three or more electrolyte layers containing a solid electrolyte are laminated, comprising:
a first electrolyte layer having a support; and
a second electrolyte layer and a third electrolyte layer disposed so as to sandwich the first electrolyte layer and having no support, wherein
a film thickness (T2) of the second electrolyte layer is 1.5 to 5 times as large as a film thickness (T3) of the third electrolyte layer.

2. The solid electrolyte laminate according to claim 1, wherein the support contains a woven fabric.

3. The solid electrolyte laminate according to claim 2, wherein a film thickness (T2) of the second electrolyte layer is 0.2 to 2 times as large as a fiber assembly width of the woven fabric.

4. The solid electrolyte laminate according to claim 1, wherein the support contains at least one of a nonwoven fabric and short fibers.

5. The solid electrolyte laminate according to claim 4, wherein the support contains a nonwoven fabric, and
the film thickness (T2) of the second electrolyte layer is 3 to 20 times as large as an average diameter of fibers constituting the support.

6. A solid-state secondary battery comprising: a positive electrode, a negative electrode, and the solid electrolyte laminate according to any one of claims 1 to 5, wherein
the second electrolyte layer is in contact with the positive electrode or the negative electrode.

7. A method for manufacturing a solid-state secondary battery, comprising the steps of:
(1) providing a second B electrolyte layer having no support to either a positive electrode mixture layer or a negative electrode mixture layer;
(2) forming a first electrolyte layer having a support, and then providing a second A electrolyte layer and a third electrolyte layer {note that, the film thickness (T2A) of the second A electrolyte layer is substantially equal to the film thickness (T3) of the third electrolyte layer} having no support so as to sandwich the first electrolyte layer to obtain a laminate precursor; and
(3) laminating the positive electrode mixture layer, the laminate precursor, and the negative electrode mixture layer so that the second A electrolyte layer and the second B electrolyte layer face each other to make a total film thickness (T2; T2A+T2B) of the second A electrolyte layer and the second B electrolyte layer to be 1.5 to 5 times as large as a film thickness (T3) of the third electrolyte layer.
